# EUROPÄISCHE PATENTSCHRIFT

(11) **EP 1 043 452 B1**
(45) Veröffentlichungstag und Bekanntmachung des Hinweises auf die Patenterteilung: **21.06.2006**
(21) Anmeldenummer: 00106486.4
(22) Anmeldetag: 25.03.2000
(51) Int. Cl.: E03C 1/08, F16L 35/00, F16L 19/00, F16L 55/24

(54) **Siebanordnung**
Filter arrangement
Agencement d'un filtre

(30) Priorität: 06.04.1999 DE 19915406
(43) Veröffentlichungstag der Anmeldung: 11.10.2000
(73) Patentinhaber: Grohe AG, 58675 Hemer (DE)
(72) Erfinder: Gnauert, Werner, 58640 Iserlohn (DE); Hochstein, Detlef, 58675 Hemer (DE)

(56) Entgegenhaltungen:
- EP-A- 0 473 558
- DE-A- 19 805 691
- GB-A- 529 887
- US-A- 3 695 450

## Beschreibung

Die Erfindung betrifft eine Anschlussverschraubung, insbesondere für eine Wasserleitung, mit einer Überwurfmutter und einen zwischen Stirnflächen von Leitungsteilen liegenden Dichtring mit einem Sieb, wobei die Überwurfmutter den Dichtring mit den Stirnflächen dicht verpresst.

Durch offenkundige Vorbenutzung ist es bei Anschlussverschraubungen bekannt, das Sieb einstückig mit einem Dichtring auszubilden. Hierbei wird der Siebkörper vorgefertigt und anschließend in eine Spritzgießmaschine eingelegt und mit einem Dichtring umspritzt. Nachteilig ist bei der bekannten Einrichtung, dass beim Umspritzen des Siebs in der Spritzform eine Abdichtung im Übergangsbereich des Siebs problematisch ist und nicht selten unerwünschte Gießhäute im Durchflussbereich des Siebs entstehen. Außerdem wurde festgestellt, dass der mit der Umspritzung aus Kunststoff hergestellte Dichtring in der eingespannten Lage zum Fließen neigt, so dass nach einem längeren Zeitraum Anschlussverbindungen undicht werden können, was äußerst unerwünscht ist.

Aus der EP-A-0 473 558 ist außerdem ein Rohrfitting für den Wasserzufluss für eine Waschmaschine bekannt, bei dem in einem Rohrstück aus durchsichtigem Material ein Sieb eingesetzt ist, das mit einem Dichtring einteilig ausgebildet ist.

Der Erfindung liegt die Aufgabe zugrunde, eine Anschlussverbindung mit einer verbesserten Siebausbildung vorzuschlagen, wobei eine platzsparende und montagefreundliche Anordnung des Siebes beibehalten werden soll.

Diese Aufgabe wird erfindungsgemäß dadurch gelöst, dass das Sieb mit einem umgebördelten Mantelbereich versehen ist, mit dem es durch Reibschluss und/oder Formschluss an der Wandung des Dichtrings in der Stecklage gehalten ist.
Weitere Ausgestaltungen der Erfindung sind in den Ansprüchen 2 bis 10 angegeben.

Die mit der Erfindung erzielbaren Vorteile bestehen insbesondere darin, dass ein Anspritzen des Dichtrings nicht mehr erforderlich ist. Vielmehr kann der Dichtring aus einem nichtfließenden Material hergestellt werden, in dessen Innenwandung das Sieb eingepresst werden kann. Das Sieb befindet sich hauptsächlich im Bereich des Dichtrings und benötigt somit im wesentlichen keinen zusätzlichen Raum. Der Dichtring mit dem eingepressten Sieb kann somit weiter als ein Teil gelagert und montiert werden.
In weiterer Ausgestaltung der Erfindung ist das Sieb zweckmäßig einstückig mit dem Mantelbereich ausgebildet und in einem Dichtring mit einer zylindrischen Innenwandung eingepresst. Hierbei kann der Mantelbereich vor dem Einpressen zweckmäßig konisch mit einem Neigungswinkel von 1 bis 10° ausgebildet sein, so dass eine sichere reibschlüssige Halterung an der Wandung gewährleistet ist. Außerdem kann zweckmäßig wenigstens die stromabwärts gelegene Stirnseite der Anschlussverschraubung mit einer Verengung versehen werden, die eine zusätzliche formschlüssige Axialsicherung des Siebes bildet.
Mit großem Vorteil kann der Dichtring aus einem Fiberwerkstoff hergestellt werden, so dass insbesondere bei Anschlussverschraubungen für Wasserleitungen eine sehr wirksame Abdichtung erzielt werden kann.
Das Sieb kann zweckmäßig aus Drahtgeflecht, vorzugsweise aus rostfreiem Stahldrahtgeflecht, hergestellt und durch einen Stanzvorgang in eine Form gebracht werden, bei der, ausgehend von einem senkrecht zur Strömung in der Anschlussverschraubung angeordneten ringförmigen Bereich, ein hutförmig gewölbter Zentralbereich für die Ansammlung von Schmutzpartikeln vorgesehen ist, während am Außenrand der Mantelbereich umgebördelt ist.

Ein Ausführungsbeispiel der Erfindung ist in der Zeichnung dargestellt und wird im folgenden näher beschrieben. Es zeigt
- Figur 1: eine Anschlussverschraubung einer sanitären Wasserarmatur im Längsschnitt;
- Figur 2: den in Figur 1 dargestellten Dichtring im Längsschnitt;
- Figur 3: das in Figur 1 gezeigte Sieb mit entspanntem konischen Mantelbereich.

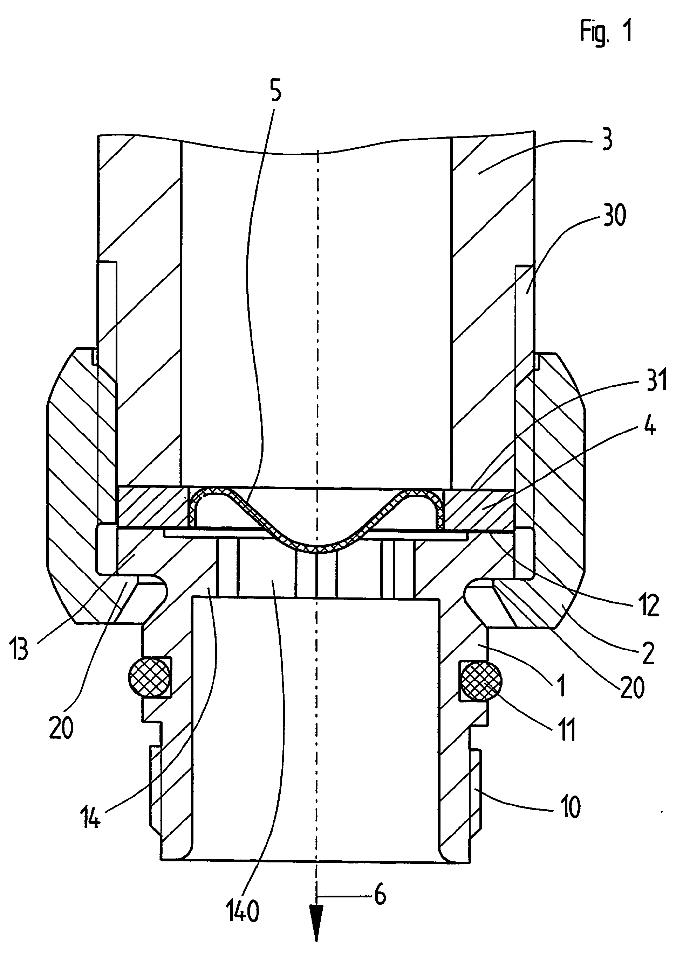

Die in Figur 1 zum Teil dargestellte Anschlussverschraubung für eine sanitäre Wasserarmatur besteht aus einem Anschlussstutzen 1, der in einem in der Zeichnung nicht dargestellten Armaturenkörper mit Gewinde 10 einschraubbar ist. Zur Abdichtung in der Einschraubstellung ist außerdem an dem Anschlussstutzen 1 ein O-Ring 11 vorgesehen. Am stromaufwärts gelegenen Endbereich des Anschlussstutzens 1 ist ein Flansch 13 angeformt, an dem eine stromaufwärts gelegene Stirnfläche 12 ausgebildet ist. Am Flansch 13 liegt eine Überwurfmutter 2 mit einer Schulter 20 an. An der Stirnseite 12 ist ein Dichtring 4 aus Fiberwerkstoff mit einer zylindrischen Innenwandung 40 angelagert. An der gegenüberliegenden Stirnseite des Dichtrings 4 ist ein Rohrstück 3 einer nur zum Teil dargestellten Anschlussleitung, beispielsweise eines S-Anschlussstücks, mit einer Stirnfläche 31 angelagert, wobei die Überwurfmutter 2 auf ein Gewinde 30 aufgeschraubt ist, so dass das Rohrstück 3 mit der Stirnfläche 31 gegen die Stirnfläche des Dichtrings 4 und der Dichtring 4 gegen die Stirnfläche 12 des Anschlussstutzens 1 dicht verpresst wird.

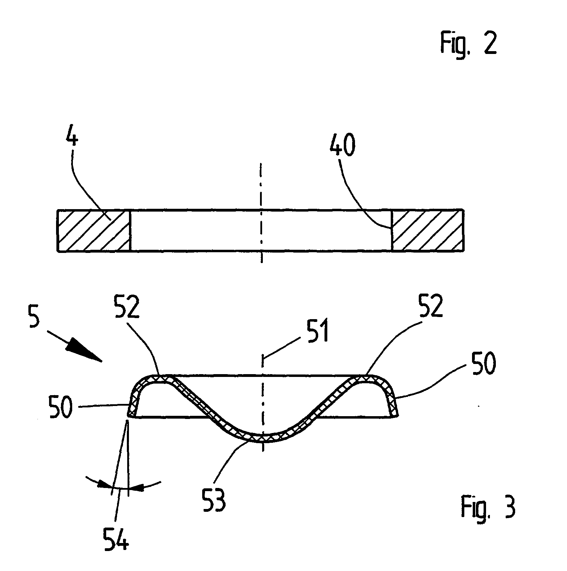

In der zylindrischen Innenwandung 40 des Dichtrings 4 ist ein Sieb 5 mit einem elastisch federnden konischen Mantelbereich 50 eingepresst. Der Mantelbereich 50 weist im entspannten Zustand, wie es in Figur 3 der Zeichnung dargestellt ist, einen Neigungswinkel 54 von 1° bis 10°, vorzugsweise 5°, auf, so dass eine reibschlüssige Halterung des Siebs 5 im eingepressten Zustand an der zylindrischen Innenwandung gewährleistet ist. Das Sieb 5 ist hierbei vorzugsweise aus einem nichtrostenden Stahldrahtgeflecht hergestellt. Selbstverständlich kann es aber aus einem gelochten Blech oder einem anderen geeigneten Halbzeug hergestellt sein. Das Sieb 5 ist hierbei rotationssymmetrisch zur Siebachse 51 hergestellt und weist einen etwa ringförmigen Bereich 52 auf, an dem ein in Fließrichtung gewölbter Zentralbereich 53 anschließt, während an der Außenseite der Mantelbereich 50 anschließt, wie es insbesondere aus Figur 3 und Figur 1 der Zeichnung zu entnehmen ist.
In dem gewölbten Zentralbereich 53 werden die aus dem Wasser herausgesiebten Partikel gesammelt, so dass über einen relativ langen Zeitraum gewährleistet ist, dass zumindest über den ringförmigen Bereich 52 immer noch ausreichend Wasser durch das Sieb hindurchtreten kann, während der Zentralbereich mit herausgefilterten Partikeln angefüllt wird.
Die Länge des Mantelbereichs entspricht etwa der Dicke des Dichtrings 4. Der Flansch 13 weist eine Durchgangsverengung 14 auf, dessen stromaufwärts gelegene Stirnseite eine zusätzliche formschlüssige Axialsicherung für das Sieb 5 bildet. An der Innenwandung der Durchgangsverengung 14 sind außerdem Kantflächen 140 für den Ansatz eines Steckschlüssels vorgesehen.
Die Anschlussverschraubung wird in Richtung des Pfeils 6 durchströmt.

## Patentansprüche

1. Anschlussverschraubung, insbesondere für eine Wasserleitung, mit einer Überwurfmutter (2) und einem zwischen benachbarten Stirnflächen (12, 31) von zwei mit der Anschlussverschranbung zu verbindenden Leitungsteilen einlegbaren Dichtring (4) mit einem Sieb (5), wobei die Überwurfmutter (2) im montierten Zustand den Dichtring (4) zwischen den Stirnflächen (12, 31) der Leitungsteile dicht verpresst, **dadurch gekennzeichnet, dass** das Sieb (5) mit einem umgebördelten Mantelbereich (50) versehen ist, mit dem es durch Reibschluss und/oder Formschluss an der Innenwandung (40) des Dichtrings (4) in der Stecklage gehalten ist.

2. Anschlussverschraubung nach Anspruch 1, **dadurch gekennzeichnet, dass** der Dichtring (4) eine zylindrische Innenwandung (40) zur Aufnahme des Mantelbereichs (50) hat.

3. Anschlussverschraubung nach Anspruch 1 oder 2, **dadurch gekennzeichnet, dass** das Sieb (5) einstückig mit dem Mantelbereich (50) ausgebildet ist.

4. Anschlussverschraubung nach wenigstens einem der Ansprüche 1 bis 3, **dadurch gekennzeichnet, dass** der Mantelbereich (50) konisch und elastisch federnd zur Siebachse (51) ausgebildet ist.

5. Anschlussverschraubung nach wenigstens einem der Ansprüche 1 bis 4, **dadurch gekennzeichnet, dass** die stromabwärts gelegene Stirnfläche (12) eine Verengung (14) aufweist, die für den Mantelbereich (50) des Siebes (5) eine zusätzliche formschlüssige Axialsicherung bildet.

6. Anschlussverschraubung nach wenigstens einem der Ansprüche 1 bis 5, **dadurch gekennzeichnet, dass** der Dichtring (4) aus einem Fiberwerkstoff hergestellt ist.

7. Anschlussverschraubung nach wenigstens einem der Ansprüche 1 bis 6, **dadurch gekennzeichnet, dass** das Sieb (5) aus Drahtgeflecht, vorzugsweise aus rostfreiem Stahldrahtgeflecht, gebildet ist.

8. Anschlussverschraubung nach wenigstens einem der Ansprüche 1 bis 7, **dadurch gekennzeichnet, dass** das Sieb (5) einen senkrecht zur Strömung angeordneten ringförmigen Bereich (52) aufweist, an dem ein hutförmig in Strömungsrichtung gewölbter Zentralbereich (53) anschließt, während am Außenrand der Mantelbereich (50) angebördelt ist.

9. Anschlussverschraubung nach wenigstens einem der Ansprüche 1 bis 8, **dadurch gekennzeichnet, dass** der Mantelbereich (50) eine axiale Länge aufweist, die der Dicke des Dichtrings (4) etwa entspricht.

10. Anschlussverschraubung nach wenigstens einem der Ansprüche 4 bis 9, **dadurch gekennzeichnet, dass** der Mantelbereich (50) vor dem Einpressen in den Dichtring (4) einen Neigungswinkel (54) von 1° bis 10°, vorzugsweise 5°, aufweist.

## Claims

1. Screw connection, especially for a water pipe, having a union nut (2) and a sealing ring (4) which has a screen (5) and can be inserted between adjacent end faces (12, 31) of two pipe parts that are to be connected by means of the screw connection, the union nut (2), in the fitted state, pressing the sealing ring (4) tightly between the end faces (12, 31), **characterised in that** the screen (5) is provided with a turned-over outer region (50) with which it is held in the inserted position against the inside wall (40) of the sealing ring (4) by means of friction and/or interlocking.

2. Screw connection according to claim 1, **characterised in that** the sealing ring (4) has a cylindrical inside wall (40) for receiving the outer region (50).

3. Screw connection according to claim 1 or 2, **characterised in that** the screen (5) is integral with the outer region (50).

4. Screw connection according to at least one of claims 1 to 3, **characterised in that** the outer region (50) is conical and resiliently springy with respect to the axis (51) of the screen.

5. Screw connection according to at least one of claims 1 to 4, **characterised in that** the end face (12) located downstream has a narrowed portion (14) which forms an additional interlocking axial retaining device for the outer region (50).

6. Screw connection according to at least one of claims 1 to 5, **characterised in that** the sealing ring (4) is made from a fibrous material.

7. Screw connection according to at least one of claims 1 to 6, **characterised in that** the screen (5) is formed of wire mesh, preferably of stainless steel wire mesh.

8. Screw connection according to at least one of claims 1 to 7, **characterised in that** the screen (5) has an annular region (52) arranged perpendicular to the flow, which annular region (52) is adjoined by a central region (53) which is curved in a hat shape in the direction of flow, while at the outer border, the outer region (50) is turned over.

9. Screw connection according to at least one of claims 1 to 8, **characterised in that** the outer region (50) has an axial length that corresponds approximately to the thickness of the sealing ring (4).

10. Screw connection according to at least one of claims 4 to 9, **characterised in that** the outer region (50) has an angle of inclination (54) of from 1° to 10°, preferably 5°, before it is pressed into the sealing ring (4).

## Revendications

1. Raccord vissé, notamment pour une conduite d'eau, comportant un écrou-chapeau (2) et un joint d'étanchéité (4) muni d'une crépine (5) installée entre les surfaces frontales voisines (12, 31) de deux pièces de conduite munies d'un raccord vissé, l'écrou-chapeau (2), à l'état monté, comprimant de manière étanche le joint d'étanchéité (4) entre les surfaces frontales (12, 31) des parties de conduite,
**caractérisé en ce que**
la crépine (5) est munie d'une zone-enveloppe (50) recourbée par laquelle la crépine est retenue en position engagée par une liaison par frottement et/ou par la forme dans la paroi intérieure (40) du joint d'étanchéité (4).

2. Raccord vissé selon la revendication 1,
**caractérisé en ce que**
le joint d'étanchéité (4) a une paroi intérieure (40) cylindrique pour recevoir la zone-enveloppe (50).

3. Raccord vissé selon la revendication 1 ou 2,
**caractérisé en ce que**
la crépine (5) est réalisée en une seule pièce avec la zone-enveloppe (50).

4. Raccord vissé selon au moins l'une des revendications 1 à 3,
**caractérisé en ce que**
la zone-enveloppe (50) a une forme conique, élastique à ressort, par rapport à l'axe (51) de la crépine.

5. Raccord vissé selon au moins l'une des revendications 1 à 4,
**caractérisé en ce que**
la surface frontale (12) située en aval comporte une partie rétrécie (14) constituant une fixation axiale par la forme, supplémentaire, pour la zone-enveloppe (50) de la crépine (5).

6. Raccord vissé selon au moins l'une des revendications 1 à 5,
**caractérisé en ce que**
le joint d'étanchéité (4) est fabriqué en une matière fibreuse.

7. Raccord vissé selon au moins l'une des revendications 1 à 6,
**caractérisé en ce que**
la crépine (5) est formée d'un tissu de fils, de préférence un tissu de fils d'acier inoxydable.

8. Raccord vissé selon au moins l'une des revendications 1 à 7,
**caractérisé en ce que**
la crépine (5) a une zone annulaire (52) perpendiculaire à la direction d'écoulement, et qui se poursuit par une zone centrale (53) bombée en forme de chapeau dans la direction d'écoulement alors que le bord extérieur de la zone-enveloppe (50) est recourbé.

9. Raccord vissé selon au moins l'une des revendications 1 à 8,
**caractérisé en ce que**
la zone-enveloppe (50) a une longueur axiale qui correspond sensiblement à l'épaisseur du joint d'étanchéité (4).

10. Raccord vissé selon au moins l'une des revendications 1 à 8,
**caractérisé en ce que**
la zone-enveloppe (50) présente avant son enfoncement de force dans le joint d'étanchéité (4), un angle d'inclinaison (54) compris entre 1° et 10°, et de préférence de 5°.
